# EUROPÄISCHE PATENTSCHRIFT

(11) **EP 2 504 679 B1**
(45) Veröffentlichungstag und Bekanntmachung des Hinweises auf die Patenterteilung: **02.01.2019**
(21) Anmeldenummer: 10785317.8
(22) Anmeldetag: 18.11.2010
(51) Int. Cl.: G01L 9/08, G01L 23/10, G01L 9/00

(54) **DRUCKSENSOR FÜR NIEDERVISKOSE MEDIEN**
PRESSURE SENSOR FOR LOW-VISCOSITY MEDIA
CAPTEUR DE PRESSION POUR MILIEUX FAIBLEMENT VISQUEUX

(30) Priorität: 25.11.2009 CH 18102009
(43) Veröffentlichungstag der Anmeldung: 03.10.2012
(73) Patentinhaber: Kistler Holding AG, 8408 Winterthur (CH)
(72) Erfinder: PLETSCHER, Ernst, CH-8460 Marthalen (CH)
(86) Internationale Anmeldenummer: PCT/CH2010/000290
(87) Internationale Veröffentlichungsnummer: WO 2011/063537

(56) Entgegenhaltungen:
- EP-A1- 0 230 491
- WO-A-2007/043068
- CH-A- 503 982
- DE-A1- 2 324 399
- DE-A1-102007 011 283
- DE-B3- 10 345 299
- US-A- 3 349 259
- US-A1- 2007 277 618

## Beschreibung

### Technisches Gebiet

Die Erfindung betrifft einen Sensor zum Messen von Drücken in niederviskosen Medien, insbesondere zur Verwendung beim Spritzgiessen, umfassend ein Gehäuse mit einer Achse A, eine einem Druckraum auszusetzende Stirnseite, sowie eine an der Stirnseite angeordnete, mit dem Gehäuse fest verbundenen Membran, wobei hinter der Membran ein Messelement angeordnet ist, welches auf Grund einer Auslenkung der Membran auf einen im Druckraum herrschenden Druck schliessen kann.

### Stand der Technik

Solche eingangs beschriebene Sensoren werden insbesondere beim Spritzgiessen verwendet und sind daher hohen Druck- und Temperaturunterschieden ausgesetzt. Ein Beispiel eines Sensors nach dem Stand der Technik ist der Sensor Typ 6167 von Kistler Instrumente AG in der Schweiz, auch beschrieben in der US 6212963. In der Regel verfügen solche Sensoren über eine relativ dicke Membrane, weil sie im Einsatz einer starken mechanischen Belastung ausgesetzt sind, beispielsweise beim Ablösen des Spritzgussteils.

Drucksensoren für andere Anwendungsgebiete können aus technischen Gründen oft nicht als Drucksensoren in Kavitäten beim Spritzgiessen verwendet werden, da sie beispielsweise eine zu langsame Ansprechzeit oder eine zu niedrige Auflösung haben, nicht temperaturbeständig genug sind oder insbesondere auch den ständigen und hohen Temperaturänderungen nicht gewachsen sind.

Ein herkömmlicher piezoelektrischer Kraftwandler ist in der Patentschrift CH503982 dargestellt.

Solche Drucksensoren sind stets mit einem kleinem Spaltabstand im Werkzeug montiert. Beim Spritzgiessen mit niederviskosen Materialien fliesst schliesslich dieses Gussmaterial in den Spalt zwischen Sensor und Werkzeug und bewirkt dadurch einen seitlichen Druck auf den vorderen Bereich des Sensors. Dieser radial auf das Sensorgehäuse wirkender Druck verursacht schliesslich eine Auslenkung der Membrane, wodurch ein Fehlsignal erzeugt wird. Untersuchungen durch Vergleichsmessungen, bei denen eine Referenzmessung mit einer frontseitig aufgeklebten dünnen Folie durchgeführt wurden, haben eine Abweichung von bis zu 20% ergeben.

Weitere Probleme solcher Sensoren sind bedingt durch Verspannungen der Sensorfronten, wenn die Montagebedingungen entsprechend ungünstig sind. Es hat sich gezeigt, dass Drucksensoren im Spritzgiessbereich durch ihre hochauflösende Eigenschaft dazu neigen, bereits bei kleinsten Verspannungen des Gehäuses ein Fehlsignal auf das Messelement zu erzeugen.

### Darstellung der Erfindung

Aufgabe der vorliegenden Erfindung ist es, einen Sensor eingangs angegebener Art anzugeben, der eine Fehlmessung durch einen seitlich radial einwirkenden Druck stark reduziert.

Die Aufgabe wird gelöst durch die Kennzeichen des unabhängigen Patentanspruchs. Insbesondere umfasst der erfindungsgemässe Sensor eine koaxial mit der Gehäuseachse A ausserhalb des Gehäuses angeordnete Druckhülse, welche stirnseitig dicht mit dem Sensor verbunden ist. Hinter dieser Verbindung ist die Druckhülse erfindungsgemäss mit einem Spalt beabstandet zum Gehäuse angeordnet, wobei sich dieser Spalt axial in Druckraum abgewandter Richtung weiter erstreckt als der Bereich des Kraftpfades über das Messelement.

Die Druckhülse soll insbesondere stark genug ausgestaltet sein, sodass sie dem auftretenden Seitendruck Stand halten kann, ohne diesen nach innen zu übertragen.

### Kurze Beschreibung der Zeichnungen

Im Folgenden wird die Erfindung unter Beizug der Zeichnungen näher erklärt. Die Bezugszeichen wurden in allen Zeichnungen beibehalten. Es zeigen
- Fig. 1: eine schematische Darstellung eines Sensors im Frontbereich nach dem Stand der Technik;
- Fig. 2: eine schematische Darstellung eines erfindungsgemässen Sensors;
- Fig. 3: eine alternative Ausführungsform der Frontgestaltung des erfindungsgemässen Sensors;
- Fig. 4: eine frontseitige Aufsicht auf einen erfindungsgemässen Sensor;
- Fig. 5: eine alternative Darstellung eines erfindungsgemässen Sensors.

### Wege zur Ausführung der Erfindung

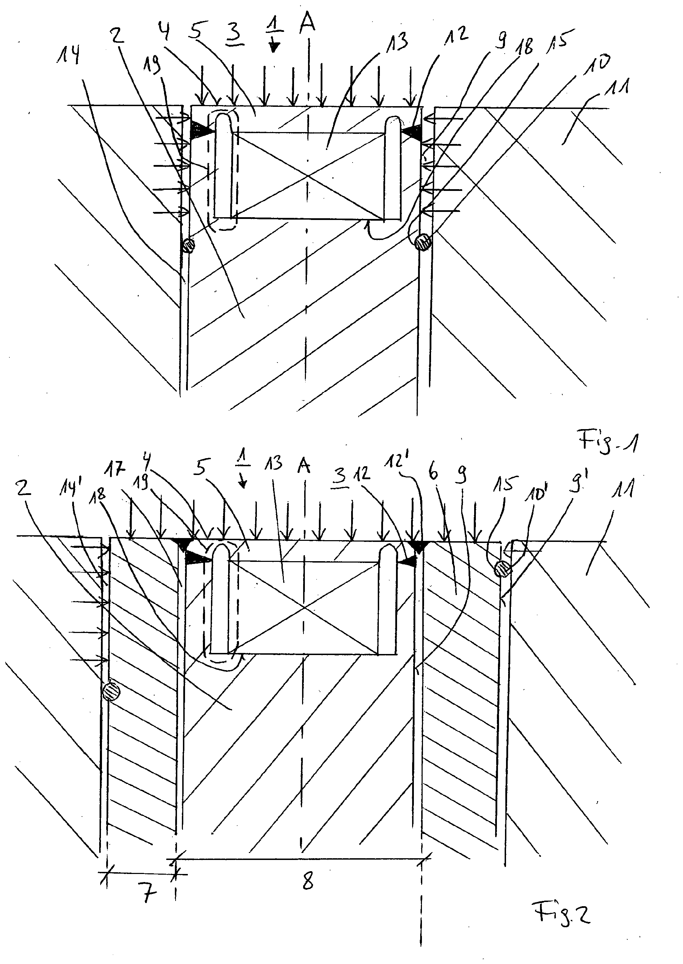

Die Fig. 1 zeigt einen Sensor 1 nach dem Stand der Technik in vereinfachter Darstellung, eingebaut in einem Werkzeug 11. Der Sensor 1 umfasst ein Gehäuse 2 mit einer Mantelfläche 9 sowie mit einer zentral durch das Gehäuse 2 verlaufenden Achse A. Er umfasst eine Stirnseite 4, welche im eingebauten Zustand einem Druckraum 3 ausgesetzt ist. Stirnseitig am Gehäuse 2 ist eine Membran 5 angeordnet, welche mit dem Gehäuse 2 fest verbundenen ist. Die Membran 5 wird in der Regel am Gehäuse 2 an einer Schweissnaht 12 angeschweisst. Der Sensor 1 kann auf Grund einer Auslenkung der Membran 5 auf einen im Druckraum 3 herrschenden Druck schliessen. Dazu verfügt der Sensor 1 über ein Messelement 13, beispielsweise einen piezoelektrischen Kristall, welcher hinter der Membran 5 angeordnet ist und sich am Gehäuse 2 rückseitig an einem Gehäuseabsatz 18 abstützt. Der durch einen Druck im Druckraum 3 verursachte geschlossene Kraftpfad im Sensor verläuft über die Membran 5, durch das Messelement 13, über den Gehäuseabsatz 18 über zum Gehäuse 2 und schliesslich über die Schweissnaht 12 wieder zurück zur Membran 5.

Die Stirnseite 4 des erfindungsgemässen Sensors 1 ist plan ausgestaltet, damit beim Spritzgiessen kein Abdruck hinterlassen wird.

Die Pfeile in den Figuren geben den Druck an, der auf den vorderen Bereich des Sensors 1 wirkt. Abgesehen von dem zu ermittelnden Druck, der in Axialrichtung auf die Membran 5 wirkt, wirkt ein nicht gewollter Druck radial auf die Mantelfläche 9 im vorderen Bereich des Sensors 1, weil stets ein Spalt 14 zwischen Sensor 1 und Werkzeug 11 vorhanden ist. Bei Verwendung von niederviskosen Materialien fliesst dieses beim Spritzgiessen in den Spalt 14 und verursacht diesen ungewollten radialen Druck. Dieser radiale Druck bewirkt eine Verformung des Gehäuses 2 in diesem vorderen Bereich, weil das Gehäuse dort in der Regel dünnwandig ausgestaltet ist, um dem Messelement 13 daneben Platz zu lassen. Eine Verformung des Gehäuses 2 führt unmittelbar zu einer Verformung der daran angrenzenden Membran 5, was zu einer Fehlmessung führt. Es wäre denkbar, das Gehäuse 2 an dieser Stelle steifer auszugestalten. Nachteilig an dieser Anordnung ist allerdings die verschlechterte Anbringung der Membran am Gehäuse.

Ein O-Ring 10 kann an der Mantelfläche 9 des Sensors 1 angebracht sein, um den Spalt 14 zwischen Sensor 1 und Werkzeug 11 abzudichten. Der O-Ring 10 verlangt eine Kerbe 15 an der Mantelfläche 9 des Gehäuses 2 als Halt für die Positionierung. Der O-Ring 10 muss hinter dem Messelement 13 angeordnet sein, weil die Kerbe 15 das Sensorgehäuse 2 im Bereich des Messelements 13, wo es bereits schon sehr dünn ausgestaltet ist, weiter schwächen würde. Dies würde sich erneut negativ auf die Messung auswirken.

In der Fig. 2 ist ein erfindungsgemässer Sensor 1 in einem Werkzeug 11 dargestellt. Er ist primär ebenso aufgebaut wie der Sensor 1 nach dem Stand der Technik. Er umfasst somit ein Gehäuse 2 mit einer Mantelfläche 9 sowie mit einer Achse A, eine am Gehäuse 2 angebrachte Membran 5, welche im eingebauten Zustand stirnseitig 4 einem Druckraum 3 ausgesetzt ist. Die Membran 5 ist in der Regel ebenso am Gehäuse 2 angeschweisst, vorzugsweise an einer Schweissnaht 12. Dahinter ist ein Messelement 13, erfindungsgemäss ein piezoelektrischer Kristall mit Transversaleffekt, angeordnet, zum Ermitteln eines auf die Membran 5 auftretenden Druckes. Der Kraftpfad verläuft gemäss der Beschreibung aus Fig. 1.

Erfindungsgemäss verfügt der Sensor 1 in Fig. 2 über eine Druckhülse 6 mit einer äusseren Mantelfläche 9', welche koaxial mit der Gehäuseachse A ausserhalb des Gehäuses 2 durch einen Spalt 17 beabstandet zu diesem angeordnet ist. Diese muss stirnseitig 4 dicht mit dem Sensor 1 verbunden sein, vorzugsweise mit einer weiteren Schweissnaht 12'.

Die Stirnseite 4 des erfindungsgemässen Sensors 1 ist auch hier plan ausgestaltet, um beim Spritzgiessen keinen Abdruck zu hinterlassen.

In dieser Anordnung ist ein Spalt 14' zwischen Werkzeug 11 und Druckhülse 6 angeordnet. Durch die dichte stirnseitige Verbindung 12' zwischen Druckhülse 6 und Gehäuse 2 kann nun kein Medium mehr in den Spalt 17 eindringen und auf die Mantelfläche 9 des Gehäuses 2 wirken und dadurch auch keine Messung verfälschen. Das Medium, insbesondere eine niederviskose Flüssigkeit beim Spritzgiessen, kann aber nun in den Spalt 14' eindringen und eine Kraft auf die Mantelfläche 9' der Druckhülse 6 ausüben, wie einseitig in Fig. 2 dargestellt. Im Gegensatz zur Gehäusewandstärke in diesem vorderen Bereich ist aber die Wandstärke 7 der Druckhülse 6 hier steif ausgestaltet, sodass der radial auftretende Druck kaum noch eine Verformung erfährt. Zusätzlich ist die Druckhülse 6 in diesem Bereich durch den Spalt 17 beabstandet zum Gehäuse 2 angeordnet, sodass sich eine allfällige kleine Durchbiegung der Druckhülse 6 nicht auf die Gehäusewand auswirkt, wodurch auch keine Auslenkung der Membran 5 hervorgerufen würde. Stirnseitig kann sich die Druckhülse 6 über die Schweissnaht 12' auf der Membran 5 abstützen, was zu keiner Auslenkung der Membran 5 führt.

Erfindungsgemäss muss sich dieser Spalt 17 axial in Druckraum 3 abgewandter Richtung weiter erstrecken als der Bereich des Kraftpfades 19 über das Messelement 13. Eine allfällige radiale Kraft, die von der Druckhülse 6 auf das Gehäuse 2 wirkt, befällt somit nicht im den Bereich des Kraftpfades 19 und kann sich somit auch nicht auf diesen übertragen. Je weiter hinten dieser Spalt 17 endet, desto spannungsfreier ist somit der Sensor 1 in seinem vorderen Bereich mit seinem Kraftpfad 19 über das Messelement.

Wünschenswert ist auch, dass der ganze vordere Bereich der Druckhülse 6 bis zum hinteren Ende des Spaltes 17 möglichst frei von Spannungen ist. Es hat sich gezeigt, dass dies erfüllt ist, wenn dieser vordere Bereich auch frei von einem Aussengewinde 20 ist. Ein Aussengewinde 20 führt, im eingebauten Zustand, stets zu einer Torsionsspannung im Körper radial innerhalb des Aussengewindes 20. Wenn also im vorderen Bereich zum hinteren Ende des Spaltes 17 kein Aussengewinde angebracht ist, kann zwischen der vorderen Verbindung 12' und dem Ende des Spaltes 17 auch keine Torsion bilden, welche sich entsprechend auf den Sensor auswirken würde.

Um den Spalt 14' zwischen Druckhülse 6 und Werkzeug 11 abzudichten, kann ein O-Ring 10, 10' eingesetzt werden. Dies ist aber nicht zwingend. Eine Dichtung kann auch weiter hinten angebracht sein. Da in der erfindungsgemässen Vorrichtung die Druckhülse 6 viel stärker ausgestaltet ist als die Wand des Gehäuses 2 im Bereich des Messelements 13, kann dieser O-Ring 10' sehr weit vorne angeordnet sein. Diese frontnahe Anbringung nahe dem Druckraum 3 ist in Fig. 2a einseitig dargestellt. Insbesondere kann dieser O-Ring 10' im Bereich neben der Membran 5 und/oder dem Messelement 13 angeordnet sein. Dies ist beim Stand der Technik nicht empfohlen, weil durch die dafür erforderliche Kerbe 15 die Wandstärke des Gehäuses 2 zusätzlich geschwächt würde. Durch diese frontnahe Anbringung des O-Rings 10' in der erfindungsgemässen Ausführung wird zusätzlich der Bereich verkleinert, in dem der unerwünschte radiale Druck auf die Mantelfläche 9' der Druckhülse 6 angreifen kann. Dies verringert den unerwünschten radialen Druck derart, dass die Wandstärke der Druckhülse 6 lokal etwas verringert werden kann, ohne Gefahr zu laufen, dass die Membran 5 dadurch durch den Seitendruck ausgelenkt wird.

Ein zusätzlicher Vorteil der frontnahen Anbringung des O-Rings 10' ist die Verkleinerung des Grates, der durch das Eindringen der niederviskosen Flüssigkeit beim Spritzgiessen in den Spalt 14' bis zum O-Rings 10' entsteht. Dies wirkt sich positiv auf die Teilequalität aus.

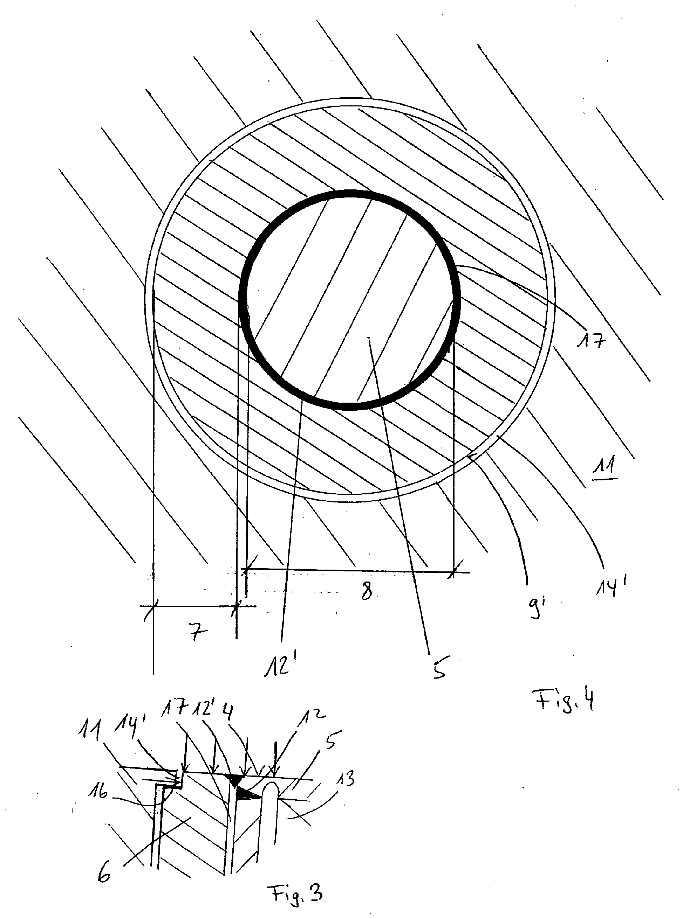

Bevorzugte Anwendungen für den erfindungsgemässen Sensor 1 sind Druckmessungen in Spritzgiesswerkzeugen, insbesondere bei gleichzeitiger Verwendung von niederviskosen Medien, aber auch Druckmessungen in Brennräumen, insbesondere von Verbrennungsmotoren. In diesem Fall ist an Stelle des O-Rings 10' frontnah eine Schulterdichtung an einem Absatz 16 angebracht. Ein solches Beispiel ist in Fig. 3 dargestellt. Ein genereller Vorteil des erfindungsgemässen Sensors 1 gegenüber herkömmlichen Sensoren besteht darin, dass der frontseitige Mantelbereich 9' unempfindlich ist gegenüber weiterer Bearbeitung. Dies betrifft insbesondere eine Anbringung von Nuten oder Kerben 15 für O-Ringe 10', ein Schaffen von Absätzen/Schultern 16 für Schulterdichtungen oder eine Abtragung von Material, um einen steten Übergang zu einem angrenzenden Werkzeug 11 zu schaffen, beispielsweise beim Spritzgiessen.

Es hat sich gezeigt, dass sich die erfindungsgemässe Ausgestaltung des Sensors 1 auch bei Anwendungen in Brennräumen vorteilhaft verhält. Eine begünstigte Wärmeabfuhr von der Membran 5 über die dichte Verbindung oder Schweissnaht 12' in die dickwandige Druckhülse 6 senkt die Temperatur im Inneren des Sensors 1.

Untersuchungen haben ergeben, dass die Wandstärke 7 der Druckhülse 6 vorzugsweise etwa zwischen halb so gross und gleich gross sein sollte wie sein Innendurchmesser 8, also etwa zwischen halb so gross und gleich gross wie der Durchmesser des Sensorgehäuses 2 innerhalb dieser Druckhülse 6, wie in Fig. 4 dargestellt. Damit wird der Durchmesser des erfindungsgemässen Sensors 1 stirnseitig etwa verdoppelt bis verdreifacht gegenüber der Ausführung nach dem beschriebenen Stand der Technik. Bei kleinen Sensoren wird eine Wandstärke 7 der Druckhülse 6 von der Grössenordnung des Innendurchmessers 8 der Druckhülse 6 empfohlen.

Bevorzugt ist die Druckhülse 6 an der Membran 5 stirnseitig angeschweisst. Alternativ kann ein erfindungsgemässer Sensor 1 derart konstruiert sein, dass eine einstückige, durchgehende Ausgestaltung der Stirnseite resultiert. Dabei kann die. Membran 5 durchgehend bis zur Mantelfläche 9' der Druckhülse 6 ausgestaltet sein. Nachteile dieser Ausführung sind die schwer zu erreichenden Vorspannbedingungen der Membran 5 vor dem Messelement 13 sowie der Einbau des Messelements 13. Vorteilhaft an der erfindungsgemässen Ausführung ist, dass die stirnseitige Schweissnaht 12' weicher ist als die Membran 5 und die Druckhülse 6. Dadurch entsteht an dieser Schweissnaht 12' eine Art Gelenk, welches eine Kraftübertragung von der Druckhülse 6 auf die Membran 5 und somit eine Auslenkung der Membran 5 durch den unerwünschten Radialdruck unterdrückt. Der Einbau des Messelements 13 bleibt unverändert.

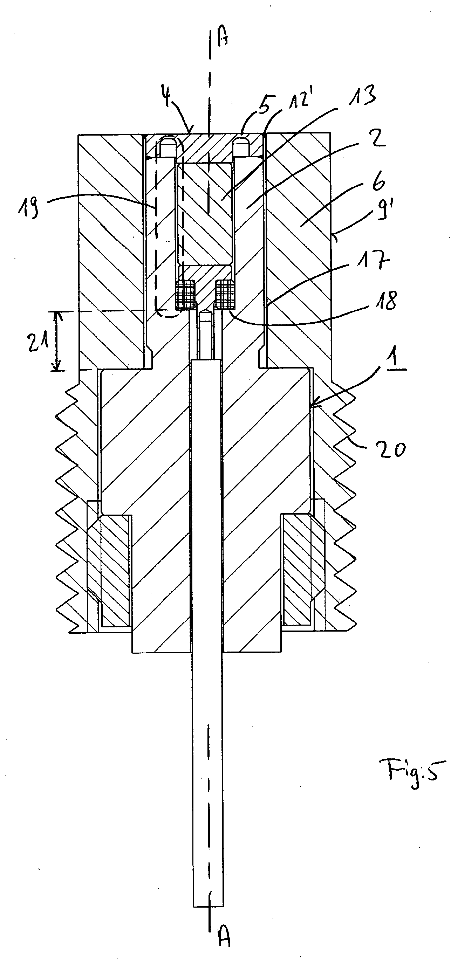

In der Fig. 5 ist ein ganzer erfindungsgemässer Sensor in alternativer Ausgestaltung dargestellt. Die Referenzzeichen entsprechen diesen der Fig. 2. In dieser Figur ist das Messelement 13 als piezoelektrischer Kristall mit Transversaleffekt ausgebildet. Ein solcher Kristall ist viel empfindlicher als ein anderer mit Longitudinaleffekt, so gibt er bereits bei niedrigen Druckunterschieden schon sehr genaue Resultate. Vorzugsweise werden drei solcher Kristallplatten in einem Kreis angeordnet verwendet.

Zusätzlich kann in einem Sensor nach Fig. 2 oder 5 ein Temperatursensor eingebaut werden, um Druck und Temperatur gleichzeitig zu messen. Dieser ist bevorzugt zentral im Sensor angeordnet. Bei drei kreisförmig angeordneten Messelementen mit Transversaleffekt befindet sich mittig Platz für einen solchen Temperatursensor.

In dieser Figur 5 ist insbesondere der Kraftpfad 19 dargestellt, der über den Gehäuseabsatz 18 verläuft. Zwischen diesem Gehäuseabsatz 18 und dem Ende des Spaltes 17 sollten axial mindestens 5, vorzugsweise mindestens 10 mm Versatz 21 vorherrschen. Damit ist gewährleistet, dass eine am Ende des Spaltes 17 wirkende radiale Kraft keinen Einfluss mehr auf den Kraftpfad 19 hat.

Zudem ist hier auch ein Aussengewinde 20 angegeben, mit welchem der Sensor 1 an einer Bohrung im Werkzeug 11 befestigt werden kann. Da das Aussengewinde 20 hinter dem Ende des Spaltes 17 beginnt, wird zwischen der Sensorfront 4 und dem hinteren Ende des Spaltes 17 beim Montieren in die Bohrung kein Moment auf die Druckhülse 6 erzeugt und somit such keines auf den vorderen Bereich des Sensors 1 übertragen.

### Bezugszeichenliste

- 1: Sensor
- 2: Gehäuse, Sensorgehäuse
- 3: Druckraum
- 4: Stirnseite des Sensors
- 5: Membran
- 6: Druckhülse
- 7: Wandstärke
- 8: Innendurchmesser
- 9 9': (äussere) Mantelfläche
- 10 10': O-Ring
- 11: Werkzeug
- 12 12': Verbindung, Schweissnaht
- 13: Messelement, piezoelektrischer Kristall
- 14 14': Spalt
- 15: Kerbe
- 16: Absatz
- 17: Spalt
- 18: Gehäuseabsatz
- 19: Kraftpfad
- 20: Aussengewinde
- 21: Versatz
- A: Achse

## Patentansprüche

1. Sensor (1) zum Messen von Drücken in niederviskosen Medien zur Verwendung beim Spritzgiessen, umfassend ein Gehäuse (2) mit einer Achse A, eine einem Druckraum (3) auszusetzende, plan ausgestaltete Stirnseite (4), sowie eine an der Stirnseite (4) angeordnete, mit dem Gehäuse (2) fest verbundene Membran (5), wobei hinter der Membran (5) ein Messelement (13) angeordnet ist, welches auf Grund einer Auslenkung der Membran (5) auf einen im Druckraum (3) herrschenden Druck schliessen kann, wobei koaxial mit der Achse A ausserhalb des Gehäuses (2) eine Druckhülse (6) angeordnet ist, welche an der Stirnseite (4) dicht mit der Membran (5) des Sensors (1) verbunden ist und hinter dieser stirnseitigen Verbindung (12') ist die Druckhülse (6) mit einem Spalt (17) beabstandet zum Gehäuse (2) angeordnet, wobei sich dieser Spalt (17) axial in Druckraum (3) abgewandter Richtung weiter erstreckt als der Bereich eines Kraftpfades (19) über das Messelement (13), **dadurch gekennzeichnet, dass** das Messelement (13) ein oder mehrere piezoelektrische Elemente mit Transversaleffekt umfasst, und dass die Druckhülse (6) eine äussere Mantelfläche (9, 9') aufweist, welche frontnah mit einem O-Ring (10') oder eine Schulterdichtung an einem Absatz (16) versehen ist.

2. Sensor (1) nach Anspruch 1, **dadurch gekennzeichnet, dass** die Druckhülse (6) im gesamten Gebiet radial ausserhalb des Spaltes (17) frei von einem Aussengewinde (20) ist zum Anbringen in einem Bohrloch.

3. Sensor (1) nach Anspruch 1 oder 2, **dadurch gekennzeichnet, dass** eine Wandstärke (7) der Druckhülse (6) mindestens halb so gross ist wie der Innendurchmesser (8) der Druckhülse (6) im Bereich der Membrane (5).

4. Sensor (1) nach einem der vorhergehenden Ansprüche, **dadurch gekennzeichnet, dass** sich dieser Spalt (17) axial in Druckraum (3) abgewandter Richtung um einen Versatz 21 von mindestens 5, vorzugsweise mindestens 10 mm weiter erstreckt als der Bereich des Kraftpfades (19) über das Messelement (13).

5. Sensor (1) nach einem der vorhergehenden Ansprüche, **dadurch gekennzeichnet, dass** der Sensor (1) zusätzlich ein Temperaturmesselement umfasst.

6. Sensor (1) nach Anspruch 5, **dadurch gekennzeichnet, dass** das Temperaturmesselement zentral entlang der Achse A im Sensor (1) angeordnet ist.

## Claims

1. A sensor (1) for measuring pressures in low-viscosity media for use in injection molding, comprising a housing (2) having an axis A, an end face (4) with planar design adapted to be exposed to a pressure chamber (3) as well as a diaphragm (5) arranged at the end face (4) and firmly connected to the housing (2) wherein a measuring element (13) is positioned behind said diaphragm (5) and adapted to infer a pressure prevailing in the pressure chamber (3) on the basis of a deflection of said diaphragm (3), wherein a pressure sleeve (6) is arranged outside of the housing (2) coaxially with axis A and being tightly connected to the diaphragm (5) of the sensor (1) at the end face (4), and behind this connection (12') at the end face said pressure sleeve (6) is spaced apart from the housing (2) by a gap (17), wherein said gap (17) extends in an axial direction opposite to the pressure chamber (3) further than the region of a force path (19) across the measuring element (13), **characterized in that** said measuring element (13) comprises one or more piezoelectric elements with transverse effect, and **in that** the pressure sleeve (6) comprises an outer surface (9, 9') provided with an O ring (10') or a shoulder seal at a projection (16).

2. The sensor (1) according to claim 1, **characterized in that** in the entire region radially outside of the gap (17) the pressure sleeve (6) is free from an external thread (17) for insertion in a drilled hole.

3. The sensor (1) according to claim 1 or 2, **characterized in that** the wall thickness (7) of the pressure sleeve (6) is at least half the inner diameter of the pressure sleeve (6) in the region of the diaphragm (5).

4. The sensor (1) according to any of the preceding claims, **characterized in that** said gap (17) extends in an axial direction opposite to the pressure chamber (3) further by an offset 21 of at least 5, preferably at least 10 mm than the region of the force path (19) across the measuring element (13).

5. The sensor (1) according to any of the preceding claims, **characterized in that** the sensor (1) further comprises a temperature measuring element.

6. The sensor (1) according to claim 5, **characterized in that** the temperature measuring element is arranged along the axis A centrally within the sensor (1).

## Revendications

1. Capteur (1) pour mesurer des pressions dans des milieux à faible viscosité pour son utilisation dans le moulage par injection comprenant un boîtier (2) ayant un axe A, une face frontale (4) réalisée de manière plane adaptée à être exposée à une chambre de pression (3) ainsi qu'un diaphragme (5) disposé à la face frontale (4) et fermement lié au boîtier (2) dans lequel derrière ledit diaphragme (5) est positionné un élément de mesure (13) adapté pour déduire une pression régnant dans la chambre de pression (3) sur la base d'une flexion du diaphragme (3), dans lequel une douille de pression (6) est disposée à l'extérieur du boîtier (2) coaxialement à l'axe A et reliée de manière étanche au diaphragme (5) du capteur (1) au niveau de la face frontale (4) et derrière cette connexion (12') au niveau de la face frontale, ladite douille de pression (6) est séparée du boîtier (2) par un espace (17), dans lequel ledit espace (17) s'étend dans une direction axiale opposée à la chambre de pression (3) plus loin que la région d'un chemin de force (19) à travers l'élément de mesure (13), **caractérisé en ce que** ledit élément de mesure (13) comprend un ou plusieurs éléments piézoélectriques à effet transversal et **en ce que** la douille de pression (6) comprend une surface extérieure (9, 9') munie d'un joint torique (10') ou d'un joint à épaulement au niveau d'une saillie (16).

2. Capteur (1) selon la revendication 1, **caractérisé en ce que** dans toute la région radialement à l'extérieur de l'espace (17), la douille de pression (6) est dépourvue de filetage extérieur (17) destiné à être inséré dans un trou foré.

3. Capteur (1) selon la revendication 1 ou 2, **caractérisé en ce que** l'épaisseur de paroi (7) de la douille de pression (6) est au moins égale à la moitié du diamètre intérieur de la douille de pression (6) dans la région du diaphragme (5).

4. Capteur (1) selon l'une quelconque des revendications précédentes, **caractérisé en ce que** ledit espace (17) s'étend dans une direction axiale opposée à la chambre de pression (3) par un décalage 21 d'au moins 5, de préférence d'au moins 10 mm plus loin que la région du chemin de force (19) à travers l'élément de mesure (13).

5. Capteur (1) selon l'une quelconque des revendications précédentes, **caractérisé en ce que** le capteur (1) comprend en outre un élément de mesure de température.

6. Capteur (1) selon la revendication 5, **caractérisé en ce que** l'élément de mesure de température est disposé le long de l'axe A au centre dans le capteur (1).
